# EUROPEAN PATENT APPLICATION

(11) **EP 1 484 678 A1**
(43) Date of publication of application: **08.12.2004**
(21) Application number: 03291340.2
(22) Date of filing: 04.06.2003
(51) Int. Cl.: G06F 9/46

(54) **Method and system for running a software application to perform a plurality of similar tasks**

(71) Applicant: Hewlett-Packard Development Company, L.P., Houston, TX 77070 (US)
(72) Inventor: Bouat, Sebastien, St Martin d'Uriage, F 38410 (FR)
(74) Representative: Lloyd, Richard Graham

(57) **Abstract**

A method is described of operating a computer running a software application to perform a plurality of similar tasks comprising the steps of: creating a plurality of operating system processes (340-1, 340-2, ..., 340-N); assigning (320) the tasks for processing in one of the operating system processes; detecting (520) when one of the operating system processes fails; stopping (530) the execution of said failed operating system process so as to free (540) memory space and CPU bandwidth associated with said failed operating system process; and re-spawning (560) said failed operating system process.

## Description

### Field of the invention

The invention relates to fault tolerant software used in, for instance, telecommunication networks and more particularly in voice, video or data processing systems for telecommunication networks.

### Background Art

Today, software is extensively used in all kinds of telecommunication networks. With the development of Internet communication, Internet Protocol networks are being implemented in many systems which aim at allowing not only different voice communication products to connect to each other via a network but also at allowing interoperability between voice, data and video communication products within the telecommunication network.

Such telecommunication networks are increasingly making use of standard non-fault tolerant hardware in order to reduce IT costs. In consequence, emphasis is being increasingly placed on software reliability and fault tolerance. With the increasing complexity of software applications, there is ever-increasing concern about the robustness of system software components. Even when exceptional caution is taken, simple logic errors can result in catastrophic failures.

In a telecommunication network, a variety of software-based elements are used to allow the interconnection and interoperability of these communication products. For example, in the case of an Internet telephony network using an elementary H323 configuration, a gatekeeper plays a central role. H323 is an international standard that has been developed for conferencing over IP networks and which aims at allowing not only Internet telephony products to inter-operate, but also at allowing interoperability between Integrated Service Digital Network (ISDN) and telephony based conferencing systems. In the H323 configuration, the gatekeeper is implemented within an Internet Protocol network connecting different end points.

Reliability as referred to herein is a function of the number of faults or failures occurring in the software application and also is a function of the impact of these faults or failures.

A failure as referred to herein means any error, fault or failure which occurs during execution of a software application.

In the event of a failure, the user may notice some inconsistency or interruption of service, but should always be able to reconnect to the service and use it again either immediately or within a sharply bounded period of time. In a telecommunication software application, a failure on a call or request may close respectively the call or the request. Furthermore, this failure may also corrupt the whole application memory and abort all the calls or the requests that are in progress.

In the prior art, there are two general approaches that enable minimisation of the impact of software application failure: a solution using an interpreted language and a solution using replication mechanisms.

Interpreted language in a software application can use well-known languages such as JAVA or proprietary languages such as Service Logic Execution Language SLEL, an HP proprietary language running on HP OpenCall Products. Since an interpreter processes both the program logic and the data to be processed at run-time, mechanisms can be built-in to it that detect many sources of application failure, such as division by zero for instance. The main drawback of this approach is its performance. An application using interpreted language is generally 10 to 100 times slower than an application using a native language.

In addition to this lower level of performance, the application of many commercially-available interpreted languages is limited by the range of software libraries that are available. There are thus advantages to using compiled languages, such as C, where possible.

Replication mechanisms involve the state and data associated with each call or request being duplicated, typically on a standby software instance that is switched into service when a problem occurs so that the user sees no interruption or anomaly in the service. Therefore, all significant changes in the software state need to be replicated to the stand-by software instance - resulting in a performance overhead. Upon failure of the software application, typically triggered by a fault in a task, the stand-by software keeps on processing tasks. In some cases, replication can also be achieved through a software state repository meaning that the software states are saved into a repository. Upon failure occurrence, another software instance downloads states from the repository and takes up task processing. However, synchronisation between an active instance and a stand-by instance in the replication model as well as in the state repository model can be problematic and can result in race-conditions that may eventually jeopardise the reliability and stability of the whole solution.

An aim of the present invention is to provide a simple technique for obviating or mitigating the problems occurring in a software application and their consequences in, for instance, a telecommunication network, particularly where the application involves the simultaneous execution of a very large number of instances of a relatively small set of relatively simple tasks based on a stored context that holds data about each task instance. Such an arrangement will be referred to herein as "massive context processing".

### Summary of the invention

An aim of the invention is achieved by implementing multiple operating system processes. Consequently, the operating system can ensure that any failure will only affect the failed operating system process and will not spread all over the telecommunication network.

Unlike other approaches, the technique described does not in itself deal with the number of failures. It is concerned with minimising the impact and consequences of software application failure.

Furthermore, the technique can be implemented with relatively small performance overhead so as not to impact the overall performance of the network and to respect the real time requirements imposed on all operating systems.

Finally, the technique can be implemented using a compiled language, such as C++, to enable the application to benefit from a wider range of existing libraries.

According to a first aspect of the present invention, there is provided a method of operating a computer running a software application to perform a plurality of similar tasks comprising the steps of: creating a plurality of operating system processes; assigning the tasks for processing in one of the operating system processes; detecting when one of the operating system processes fails; stopping the execution of said failed operating system process so as to free memory space and CPU bandwidth associated with said failed operating system process; and re-spawning said failed operating system process.

In applications of the technique to telecommunications each task can be associated with a call and at least some of the tasks can be initiated by messages received over a telecommunication network and can have an associated stored context. In alternative embodiments, the tasks can be the processing of HTTP requests, for instance.

The method can comprise modifying the number of operating system processes.

The tasks can be assigned to the processes using a load-balancing algorithm. Detection of the failed process can be carried out, for instance, using a heartbeat mechanism.

According to a second aspect of the present invention, there is provided a computer system running a software application to perform a plurality of similar tasks comprising a plurality of operating system processes each associated with allocated respective memory spaces , said software application comprising: a dispatcher element to assign each one task to one of the plurality of operating system processes; a controller for detecting a failed operating system process and to halt and respawn the execution of said failed operating system process; each of said plurality of operating system processes being arranged to process independently at least one of the plurality of similar tasks.

The computer system can comprise a network interface and wherein at least some of the tasks can be initiated by messages received over a network.

To allow the number of processes to reflect the likelihood of a failure occurring, the software application can be provided with a configuration interface to allow manual modification of the number of operating system processes.

In a third aspect the invention provides a storage medium carrying a software application to perform a plurality of similar tasks, the application comprising: a first program code element to create a plurality of operating system processes each associated with allocated respective memory spaces; a second program code element to assign each one task to one of the plurality of operating system processes; a third program code element for detecting a failed operating system process and to halt and respawn the execution of said failed operating system process.

### Brief description of the drawings

Embodiments of the present invention will now be described by way of example only, with reference to the accompanying drawings in which:
Figure 1 shows a schematic view of an environment implementing a gatekeeper of the prior art.
Figure 2 shows a schematic view of an environment embodying a gatekeeper according to the present invention.
Figure 3 shows a more detailed schematic view of the gatekeeper according to the present invention.
Figure 4 illustrates the amount of CPU overhead being used to manage processes as a function of the number of operating system processes in an operating system.
Figure 5 illustrates a flow chart of failure detection of an operating system process in an operating system.

### Detailed description of the preferred embodiments

In the following the invention will be described in the context of its implementation in an H323 gatekeeper application. It should be kept in mind, however, that the example of a gatekeeper is purely illustrative and the invention may equally be applied to any other equivalent or comparable situation.

As voice or data communication over IP networks are being more and more commonly used in telecommunication networks infrastructure, the increasing voice and data IP traffic requires higher and higher availability on the part of the gatekeeper system. The emphasis is on increasing the availability of the service to users. Even though the term "call" and "request" are referring respectively to voice communications and data communications, both terms are interchangeable and will not be used distinctively in the description that follows.

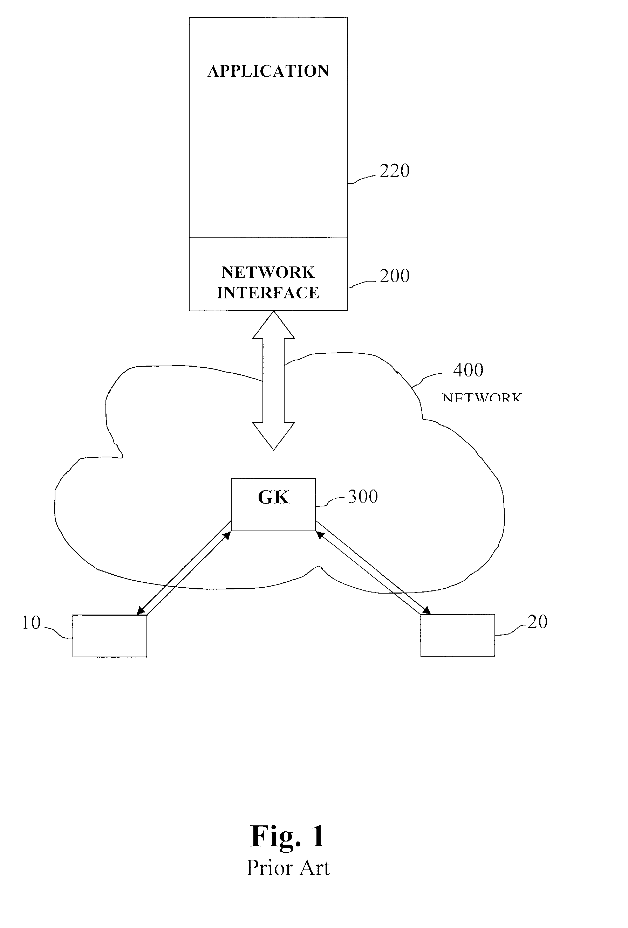

Referring now to Figure 1, a central element or a gatekeeper 300 is implemented in an IP network infrastructure 400 which allows two end points 10, 20 to establish a connection which can be either a data, a voice or a video connection, for instance. In many implementations, the gatekeeper 300 will be seen as a sole gatekeeper from the rest of the IP network 400 and from other signalling services. It is composed of a network interface 200, an application 220 or a plurality of applications depending on the needs of the telecommunication network.

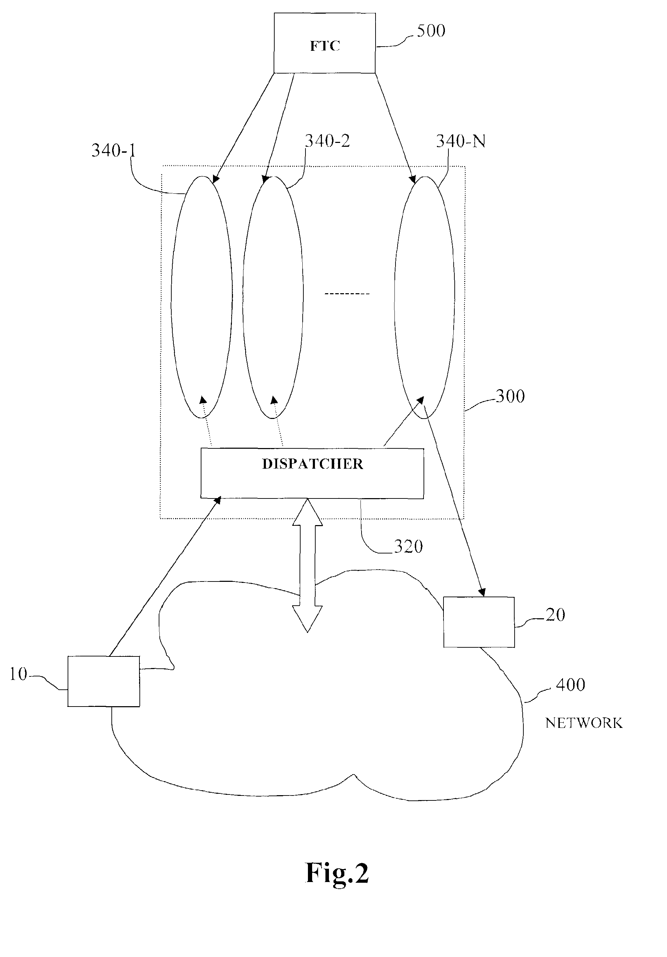

Referring now to Figure 2, a schematic view of an environment embodying a gatekeeper 300 is shown wherein the execution of the operating system is distributed across a number N of operating system processes 340-1, 340-2,... , 340-N. Each process of the operating system interacts with an allocated portion of memory space. Each portion of the allocated memory space is protected by the underlying operating system from corruption caused by other processes. Therefore, if a portion of an allocated memory space is corrupted by a failure, the failure cannot spread to other portions of the memory space or processes.

Fault isolation ensures that a software application failure in one instance of the service does not disrupt other executing instances of the service in other processes. Furthermore, with a large number of requests or calls being processed simultaneously, a software application failure in one instance should not cause the entire execution environment to crash. Instead, as will be described below the system is arranged to detect and isolate failure at a process level.

Failure isolation is achieved by the implementation of a plurality of operating system processes. The distribution of processes enables a desired level of robustness to failure to be obtained since the processing is distributed over many OS processes and the OS ensures that any failure only affects the failed operating system process.

Since the application as a whole processes a plurality of similar tasks, each operating system process 340-1, 340-2,... , or 340-N serves to process a limited number of tasks. A front-end dispatcher 320 serves to route the requests or calls to/from the network from/to the appropriate operating system process. Dispatcher 320 analyses the call or request, identifies its recipient and forwards the call or request to the identified process. A dispatching algorithm is implemented in the dispatcher 320 so as to dispatch incoming messages to any one of the N operating system processes 340-1, 340-2,... , or 340-N. Any suitable dispatching or load balancing algorithm can be used for this partitioning of the operating system processes.

As previously described herein, the operating system prevents a failing process from spreading over other running processes. By implementing these parallel operating system processes, in case a failure occurs in the processing of a task, the impact will not go beyond the concerned operating system process and its private memory space. Consequently, other tasks that are being processed in other operating system processes will not be affected by the failure.

In a Voice over IP network environment using an H323 network, the H323 gatekeeper is accessed through the H323 dispatcher since the dispatcher will be assigned the gateway IP address. Thus, any H323 message received from an IP telephone 10 connected to the IP network 400 goes to the H323 dispatcher 320. According to the dispatching algorithm employed, the dispatcher 320 finds the H323 gatekeeper process or the operating system process 340-1, 340-2, ..., 340-N assigned to process the call or request, or elects a new operating system process. Then, dispatcher 320 forwards the received H323 message to the selected operating system process. In Figure 2, the selected process instance is process instance 340-N.

The H323 gatekeeper process instance 340-N receives the H323 message just as if there was no dispatcher at all. It then processes the message according to the II323 protocol. This may result in sending a message over the H323 network 400. In Figure 2, the recipient is a called IP telephone 20.

A Fault Tolerance Controller FTC element 500 is provided to monitor the active status of the II323 gatekeeper instances or the operating system processes 340-1, 340-2, ..., 340-N and ensures monitoring and re-spawning of processes in case a failure occurs in the operating system processes. In order to trigger the monitoring and re-spawning of processes, the fault tolerance controller 500 may use suitable algorithms already known in the state of the art that make use of heartbeat mechanisms or the like, for instance.

If one gatekeeper instance or operating system process 340-1, 340-2,...,340-N fails, it is re-started automatically by the fault tolerance controller 500. Failure can be caused, for instance by a "hard" failure such as division by 0, memory error or software application failure (infinite loop, CPU over-consumption, etc).

The application can be written in a compiled language so as to benefit from existing native language libraries. For instance, when the operating system is using a WEB server, all the WEB interfaces in native language are immediately available with the libraries, which therefore do not need to be converted using an interpreted language. The application can therefore be directly compiled for the operating system using standard compilers.

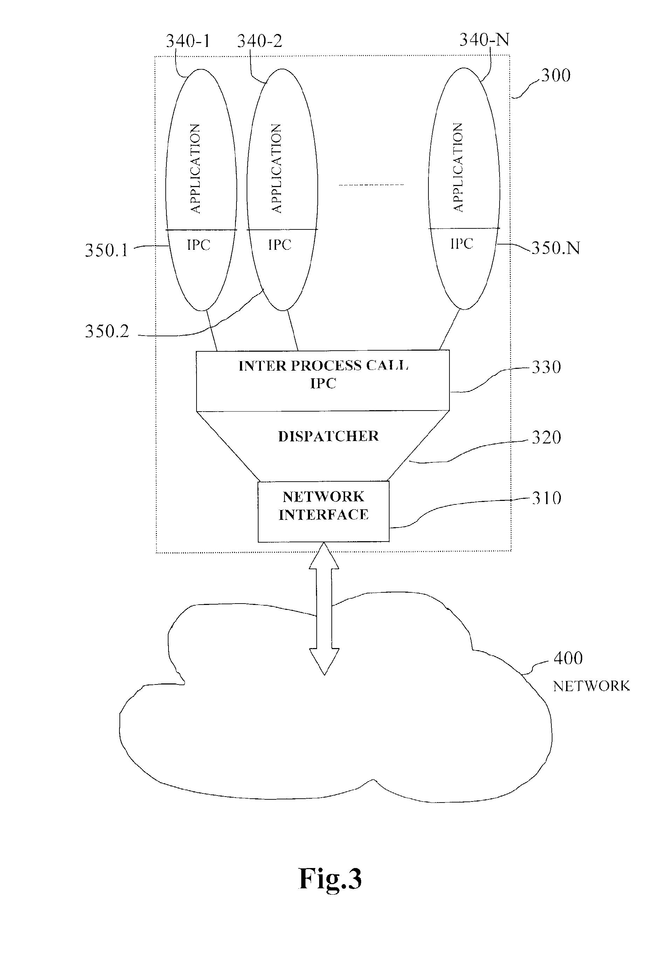

Figure 3 depicts in more detail a schematic view of the gatekeeper 300. The execution of an application is distributed across a number N of operating system processes 340-1, 340-2, ... , 340-N, thereby reducing the number of tasks that is being processed by each operating system process: OS process # 1 to OS process # N.

In order to handle the distribution of logic and data across these multiple processes, a preferred embodiment is shown in Figure 3 wherein an inter-process call or IPC mechanism, is used. A central inter-process call function 330 connected to the dispatcher 320 is therefore interfacing with inter-process call functions 30-1, 330-2, ..., 330-N associated with each process 340-1, 340-2, ..., 340-N.

This preferred embodiment also includes additional intelligence in the dispatcher 320 as the network 400 must deliver service requests to the correct operating system process 340 or to the alternative operating system process in the case of process failure. The network interface 310 operates in co-operation with the dispatcher 320 to direct calls or requests based on a round-robin algorithm or any suitable load balancing algorithm.

To detect a failure of one of the operating system processes, a heartbeat mechanism is used between the fault tolerance controller and the operating system process.

A synchronisation mechanism between each operating system process or H323 gatekeeper instance 340-1, 340-2, ..., 340-N and the H323 dispatcher 320 which serves to ensure that the dispatcher is informed about which are the up and running processes or instances is not shown in Figure 3. Such a synchronisation mechanism can be implemented easily using a simple "HELLO" mechanism, where each instance or process sends periodically a "HELLO" message to the dispatcher 320. Each time the dispatcher receives this "HELLO" message it can assume the instance or process to be alive or active for a certain amount of time. This operation is repeated periodically so as to update the list of processes or instances that are alive or active. The HELLO mechanism is based on the same principle as the heartbeat mechanism used between the fault tolerance controller and the high availability process and both mechanisms perform the same function.

In order to give a numerical illustration, an HP OpenCall MultiService controller 1.2 product running on an HP L4000 computer with 3 440MHz CPUs can handle up to 6000 simultaneous H323 calls with today's technology. This means that each failure potentially aborts 6000 calls. Assuming for the sake of illustration only that the H323 gatekeeper fails once per week, this means that 6,000 calls and requests are potentially lost weekly, so that potentially 6000 callers are unhappy with the service provided by the H323 network. If call handling is distributed over 50 processes (which is a reasonable number for such hardware) the impact of a failure will be limited to 120 calls per week.

If the gatekeeper were split over one hundred processes, only 60 calls or requests would be lost each week.

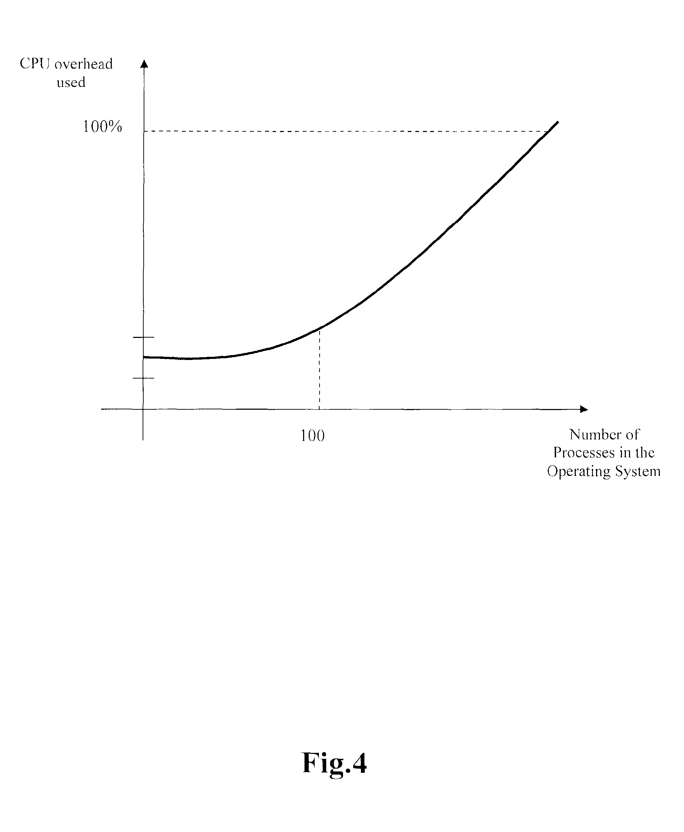

The higher the number N of processes of the operating system is, the more reliable the system will be. However, the performance overhead that results from the operating system managing multiple processes scales with the number of processes, as is illustrated schematically in Fig 4, and will become unacceptable.

Therefore, the number of processes chosen should be large enough so as to allocate an appropriate number of tasks to be handled by each operating system process, but small enough to avoid a significant overhead in the operating system process. The inventors have concluded that, with present systems, a number N of processes of the operating system between fifty and one hundred is preferable in order to reach optimal performance of the operating system. In such a case, only 2% of tasks may be damaged by a failure.

A platform implementing a gatekeeper using the H323 standards as shown in Figure 2 is illustrative of an environment wherein the performance of 2% of damaged tasks can be obtained. Indeed, the gatekeeper is composed of a series of 50 gatekeeper instances 340-1, 340-2, ... , 340-50 served to process the calls or requests received from the network using a round-robin algorithm. The percentage of 2% is a drastic reduction of damaged tasks.

Figure 4 illustrates schematically the amount of the CPU overhead being used to execute the processes according to the number of processes. For a number N of processes in an operating system between fifty and one hundred, the percentage of CPU overhead being used is acceptable.

In preferred embodiments, the number of processes used can be varied during the lifetime of the software application using a suitably arranged configuration interface (not shown). At the beginning when the application is newly released and relatively unstable, it may be expected to be accessed by fewer clients. Therefore, there will be fewer requests or calls such that the application can be configured to run over a relatively large number of processes despite the increased OS overhead. Over time, bugs will gradually be fixed in the software application which will then become more mature and more stable, and the number of requests handled may increase. As a consequence, the number of processes can be reduced, thereby lowering the OS overhead and releasing more CPU power to run the software application.

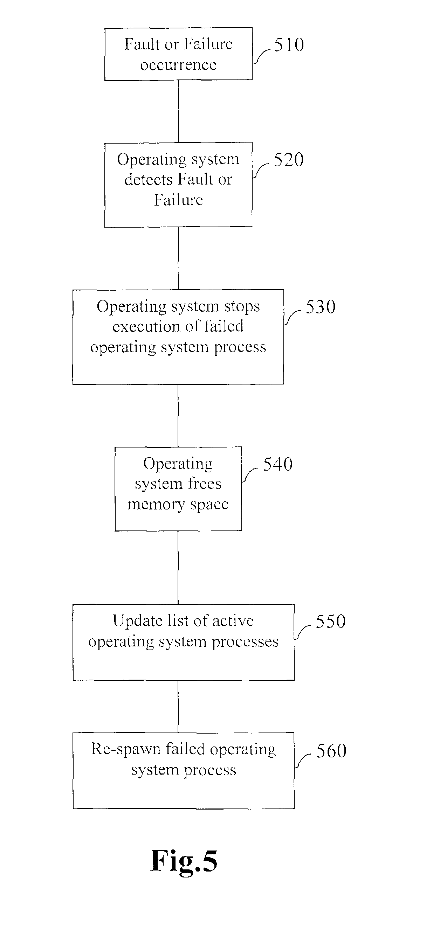

Figure 5 is a flow chart showing failure detection in an operating system process. When a failure occurs at step 510, it takes a short time before the dispatcher 320 and the fault tolerance controller FTC 500 detect the failure at step 520 either by using the HELLO mechanism or the heartbeat mechanism. At step 530, the FTC 500 requests the operating system to kill the process which will free the memory space that is allocated to the failed operating system process at step 540. The other operating system processes are not affected by the failure. By killing the failing process, the associated CPU bandwidth is also freed and allocated to other processes. Finally at step 550, the list of active operating system processes is updated and failed operating system process is re-spawned or reactivated by the FTC at step 560.

Improvements and modifications in the number of processes, the type of load balancing algorithm and the type of Fault Tolerance controller may be incorporated in the foregoing without departing from the scope of the present invention. More specifically, the terminal end points connected to the IP network can be usual telephones, IP terminals, videoconference terminals or personal computers. Furthermore, the technique may be applied not only to software used in IP networks but to any other kind of network.

## Claims

1. A method of operating a computer running a software application to perform a plurality of similar tasks comprising the steps of:
creating a plurality of operating system processes (340-1, 340-2, ..., 340-N);
assigning (320) the tasks for processing in one of the operating system processes;
detecting (520) when one of the operating system processes fails;
stopping (530) the execution of said failed operating system process so as to free (540) memory space and CPU bandwidth associated with said failed operating system process; and
re-spawning (560) said failed operating system process.

2. A method as claimed in claim I wherein at least some of the tasks are initiated by messages received over a network.

3. A method as claimed in claim 1 or claim 2 wherein each task has an associated stored context.

4. A method as claimed in any preceding claim for use in a telecommunications system wherein each task is associated with a call.

5. A method as claimed in any preceding claim comprising modifying the number of operating system processes.

6. A method as claimed in any preceding claim wherein the tasks are the processing of HTTP requests.

7. A method as claimed in any preceding claim wherein the tasks are assigned to the processes using a load-balancing algorithm.

8. A method as claimed in any preceding claim wherein detection of the failed process is carried out using a heartbeat mechanism.

9. A computer system running a software application to perform a plurality of similar tasks comprising a plurality of operating system processes (340-1, 340-2, ..., 340-N) each associated with allocated respective memory spaces , said software application comprising:
a dispatcher element to assign each one task to one of the plurality of operating system processes;
a controller for detecting a failed operating system process and to halt and respawn the execution of said failed operating system process;
each of said plurality of operating system processes being arranged to process independently at least one of the plurality of similar tasks.

10. A computer system as claimed in claim 9 comprising a network interface and wherein at least some of the tasks are initiated by messages received over a network.

11. A computer system as claimed in claim 9 or claim 10 wherein each task has an associated stored context.

12. A computer system as claimed in any preceding claim for use in a telecommunications system wherein each task is associated with a call.

13. A computer system as claimed in any preceding claim wherein the software application is provided with a configuration interface to allow manual modification of the number of operating system processes.

14. A computer system as claimed in any preceding claim wherein the tasks are the processing of HTTP requests.

15. A computer system as claimed in any preceding claim wherein the dispatcher assigns the tasks to the processes using a load-balancing algorithm.

16. A computer system as claimed in any preceding claim wherein the controller detects failed processes using a heartbeat mechanism.

17. A storage medium carrying a software application to perform a plurality of similar tasks, the application comprising:
a program code element to create a plurality of operating system processes (340-1, 340-2, ..., 340-N) each associated with allocated respective memory spaces;
a program code element to assign each one task to one of the plurality of operating system processes;
a program code element for detecting a failed operating system process and to halt and respawn the execution of said failed operating system process.

18. A storage medium as claimed in claim 17 comprising program code elements to manage a context associated with each task.

19. A storage medium as claimed in claim 17 or claim 18 wherein the software application is provided with a configuration interface to allow manual modification of the number of operating system processes.
